# FASCICULE DE BREVET EUROPEEN

(11) **EP 1 063 496 B1**
(45) Date de publication et mention de la délivrance du brevet: **06.05.2004**
(21) Numéro de dépôt: 00401729.9
(22) Date de dépôt: 16.06.2000
(51) Int. Cl.: G01D 5/20

(54) **Capteur de déplacement magnétique**
Magnetischer Verschiebungssensor
Magnetic displacement sensor

(30) Priorité: 23.06.1999 FR 9908037
(43) Date de publication de la demande: 27.12.2000
(73) Titulaire: Peugeot Citroen Automobiles SA, 92200 Neuilly sur Seine (FR)
(72) Inventeur: Grosjean, Olivier, 92300 Levallois (FR)
(74) Mandataire: Habasque, Etienne Joel Jean-François

(56) Documents cités:
- EP-A- 0 010 303
- EP-A- 0 317 497
- EP-A- 0 466 604
- DE-A- 4 446 313
- "Basic Solid-State Electronics" 1982 , VAN VALKENBURGH, NOOGER & NEVILLE, INC. , ROCHELLE PARK, NEW JERSEY, USA XP002132659 * page 3-8 *

## Description

La présente invention concerne un capteur de déplacement, notamment pour véhicule automobile.

Plus particulièrement, l'invention se rapporte à un capteur de déplacement du type comportant une cible magnétique associée à une pièce dont il y a lieu de capter le déplacement et un transducteur magnétique raccordé à des moyens de traitement de signaux de sortie de ce transducteur, pour déterminer le déplacement de la cible et donc de la pièce.

Ce type de capteurs trouve de nombreuses applications par exemple dans les véhicules automobiles qui nécessitent de plus en plus souvent l'utilisation de capteurs de position ou de vitesse peu coûteux et devant fonctionner dans un environnement sévère en termes notamment de température et de vibration.

En fait, il existe déjà dans l'état de la technique, différents types de capteurs pour ce genre d'applications.

Ainsi, par exemple, on connaît des capteurs inductifs qui sont largement utilisés dans le domaine de l'industrie automobile.

Ces capteurs comportent un noyau ferromagnétique et un aimant permanent et la rotation de la cible est traduite par un signal électrique périodique en sortie d'un bobinage qui est une image du passage des motifs magnétiques.

Cependant, ces capteurs ne fonctionnent pas à vitesse nulle et il est nécessaire de surdimensionner les éléments magnétiques et le nombre de spires du bobinage pour obtenir un signal utile suffisant à basse vitesse, dans le cas par exemple d'un système d'anti-blocage de roue.

Par ailleurs, la liaison entre le capteur et les moyens de traitement de signaux associés se fait par un câble blindé.

On conçoit alors que la quantité de matière première coûteuse utilisée pour la fabrication de ces capteurs, est difficilement réductible et que les performances en résolution de ceux-ci deviennent insuffisantes en raison de l'évolution des besoins.

On connaît également dans l'état de la technique des capteurs mettant en oeuvre des sondes à effet Hall ou à magnétorésistance.

Cependant, les moyens de traitement des signaux de sortie de celles-ci sont intégrés dans le transducteur et sont donc soumis à l'environnement sévère.

Ces sondes sont alors affectées par des dérives thermiques importantes de la tension de décalage qui affectent notablement leur précision sur la plage de température de fonctionnement.

La correction de ce défaut nécessite le développement de techniques sophistiquées de compensation automatique et l'utilisation d'aimants permanents par exemple en samarium-cobalt dans le cas d'une association avec des cibles ferromagnétiques, rendant ces sondes très onéreuses.

On connaît du document EP-A-0 010 303 un dispositif de conditionnement de signaux comprenant un transducteur magnétique muni d'un bobinage pour déterminer la position angulaire d'une cible par l'utilisation et le traitement simultanés de deux courants de transducteur pour obtenir deux signaux de courant continu, ces deux signaux étant nécessaires ensemble pour déterminer sans ambiguïté la position angulaire de la cible.

Le but de l'invention est donc de résoudre ces problèmes en proposant un capteur de déplacement qui soit simple, fiable, qui puisse fonctionner dans un environnement sévère, qui présente une bonne résolution et dont le coût de fabrication soit le plus faible possible.

A cet effet, l'invention a pour objet un capteur conforme à la revendication 1.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un capteur de déplacement selon l'invention et des moyens électroniques associés à celui-ci;
- les Fig.2 et 3 représentent deux exemples de réalisation d'une cible magnétique entrant dans la constitution d'un capteur selon l'invention;
- les Fig.4,5 et 6 représentent trois exemples de réalisation d'un transducteur magnétique entrant dans la constitution d'un capteur selon l'invention; et
- les Fig.7 à 12 illustrent différentes dispositions relatives d'un transducteur magnétique et d'une cible magnétique.

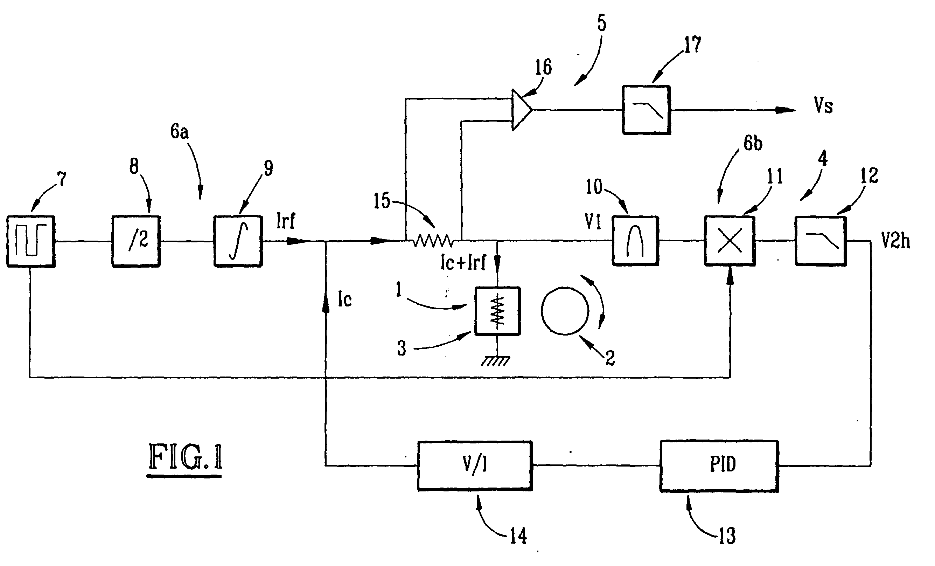

On a représenté de façon générale sur la figure 1, un capteur de déplacement qui est désigné par la référence générale 1.

Ce capteur de déplacement comporte une cible magnétique désignée par la référence générale 2, associée à une pièce dont il y a lieu de capter le déplacement et à un transducteur magnétique désigné par la référence générale 3, raccordé à des moyens de traitement des signaux de sortie de ce transducteur pour déterminer le déplacement de la cible et donc de la pièce.

Ces différents moyens seront décrits plus en détail par la suite, mais l'on notera que le transducteur comporte au moins un circuit magnétique sur lequel est disposé au moins un bobinage.

Ce bobinage est raccordé à des moyens d'alimentation de celui-ci en courant de compensation pour engendrer dans le circuit magnétique un champ magnétique opposé au champ créé dans celui-ci par la cible magnétique en déplacement afin d'obtenir un champ nul dans le circuit.

Le courant de compensation est désigné par la référence I_{c} sur cette figure 1.

Les moyens d'alimentation sont quant à eux désignés par la référence générale 4 et sont raccordés au bobinage du transducteur.

De plus, il est prévu des moyens de traitement des signaux de sortie de ce transducteur pour déterminer le déplacement de la cible et donc de la pièce, ces moyens de traitement comportant des moyens d'analyse de ce courant de compensation pour déterminer ce déplacement.

Ces moyens sont désignés par la référence générale 5 sur cette figure.

Le bobinage du transducteur est également relié à des moyens 6a de superposition sur le courant de compensation I_{c} d'un courant périodique radiofréquence I_{rf}, par exemple sinusoïdal, d'amplitude déterminée pour engendrer dans le circuit magnétique, un champ de saturation du matériau de celui-ci à chaque alternance du courant radiofréquence et à des moyens 6b d'analyse d'un harmonique de la tension résultante présente aux bornes du bobinage pour asservir l'amplitude de celui-ci à zéro en faisant varier le courant de compensation I_{c}.

L'harmonique analysé peut être un harmonique pair tel que le second ou un harmonique impair tel que le premier.

Les moyens de superposition désignés par la référence générale 6a comprennent par exemple un oscillateur désigné par la référence générale 7 sur cette figure 1.

Dans le cas de l'analyse du second harmonique du signal de tension, cet oscillateur 7 délivre un signal à une fréquence multiple comme par exemple double de celle du courant périodique I_{rf}, à l'entrée d'un diviseur de fréquence par deux, désigné par la référence générale 8, dont la sortie est reliée à un module de mise en forme des signaux désigné par la référence générale 9, relié au bobinage du transducteur 3.

Les moyens d'analyse 6b comprennent quant à eux un amplificateur passe-bande désigné par la référence générale 10, qui est raccordé au bobinage du transducteur 3 pour amplifier et sélectionner l'harmonique correspondant du signal de tension V₁ présent aux bornes de celui-ci, la sortie de cet amplificateur passe-bande étant relié à un multiplicateur 11 recevant également en entrée, un signal issu de l'oscillateur 7, pour assurer une détection synchrone.

La sortie de ce multiplicateur 11 est reliée à un filtre passe-bas 12 qui délivre un signal de tension V₂ₕ proportionnel à l'amplitude et à la phase de l'harmonique correspondant, à un correcteur de type PID par exemple, désigné par la référence générale 13.

La sortie de ce correcteur de type PID 13 est reliée à un convertisseur tension-courant désigné par la référence générale 14, délivrant le courant I_{c} de compensation au bobinage.

Les moyens d'analyse 5 du courant de compensation I_{c} comprennent quant à eux une résistance désignée par la référence générale 15 sur cette figure, en série avec le bobinage du transducteur et aux bornes de laquelle sont raccordées les entrées d'un amplificateur 16, dont la sortie est reliée à un filtre passe-bas 17, délivrant une tension Vₛ proportionnelle à ce courant de compensation.

On conçoit alors que dans ce qui vient d'être décrit, on met en oeuvre une méthode de détection synchrone pour l'analyse du second harmonique du signal de tension présent aux bornes du bobinage du transducteur.

L'amplificateur passe-bande 10 effectue une présélection et une amplification du second harmonique, tandis que l'ensemble multiplicateur 11 et filtre passe-bas 12 réalise l'analyse harmonique en délivrant en sortie un signal V₂ₕ proportionnel à l'amplitude et la phase du second harmonique et à la tension V₁ aux bornes du bobinage.

Cette tension V₂ₕ image du second harmonique est traitée par le correcteur 13 par exemple de type PID et le convertisseur tension-courant 14 délivre le courant de compensation I_{c} au bobinage du transducteur.

Les modules d'oscillateur, de diviseur et de mise en forme 7,8,9 respectivement, engendrent le courant périodique I_{rf} à la fréquence F₀ et le signal de référence à la fréquence 2_{F0} pour la détection synchrone, le courant périodique radiofréquence résultant I_{rf} étant superposé sur le courant I_{c} délivré par le convertisseur 14, dans le bobinage du transducteur.

Le courant circulant dans ce bobinage, c'est-à-dire I_{rf} + I_{C} est prélevé grâce à la résistance 15 qui peut être une résistance shunt de précision, et l'amplificateur 16.

L'information à haute fréquence est éliminée par le filtre passe-bas 17 pour fournir en sortie un signal de tension représentatif du déplacement de la cible.

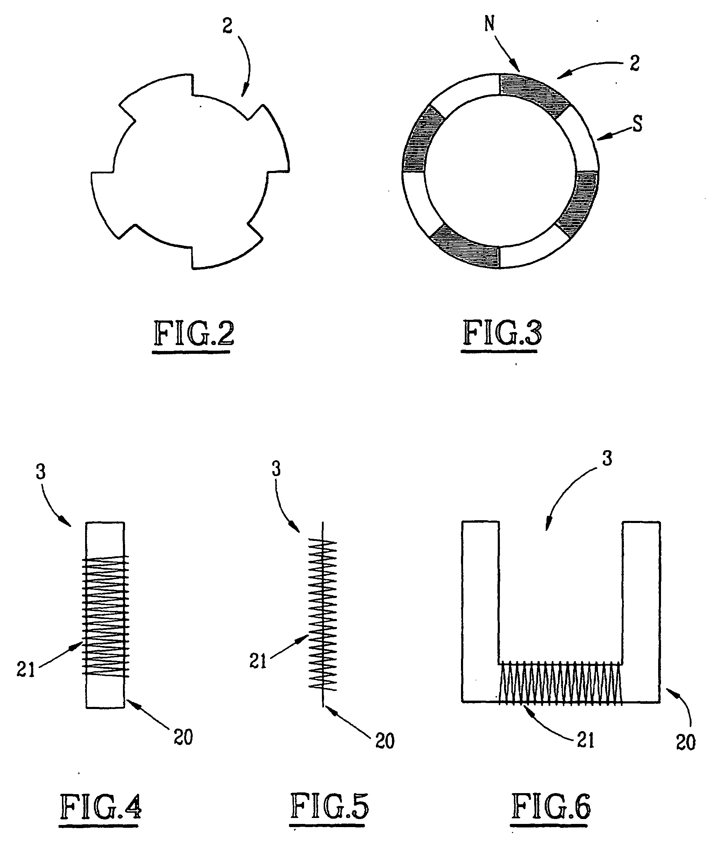

Deux catégories principales de cibles magnétiques 2 peuvent alors être utilisées, comme celles illustrées sur les figures 2 et 3, qui illustrent respectivement la réalisation de cibles ferromagnétiques (Fig.2) et ferrimagnétiques (Fig.3).

Les cibles ferromagnétiques (Fig.2) sont formées en matériau magnétique doux et comportent un motif magnétique formé par des dents, des lamelles magnétiques ou des perforations, etc...

L'association de ces cibles à des transducteurs magnétiques, nécessite l'utilisation d'un aimant auxiliaire pour polariser magnétiquement la cible.

Les cibles ferrimagnétiques (Fig.3) se présentent quant à elles sous la forme d'une bague ou d'un disque et sont constituées de poudre magnétique à haute coercivité.

On crée alors à la surface de la cible, une aimantation multipolaire comportant une alternance de pôles Nord et de pôles Sud magnétiques.

Sur les figures 4 à 6, on a illustré différents exemples de réalisation du transducteur 3.

Ce transducteur est en fait constitué d'un circuit magnétique sur lequel est disposé un bobinage.

Sur ces figures, le circuit magnétique est désigné par la référence 20 tandis que le bobinage est désigné par la référence générale 21.

Le circuit magnétique peut alors présenter différentes formes, telles que par exemple la forme d'un ruban comme cela est représenté sur la figure 4, d'un fil comme cela est représenté sur la figure 5 ou d'un tore coupé (par exemple en U) comme cela est représenté sur la figure 6.

Tous les matériaux magnétiques à forte perméabilité magnétique, à faible champ coercitif et à faible magnétostriction, peuvent convenir comme par exemple les matériaux de type amorphe, nanocristallin, de la famille des fer-nickel ou des ferrites, etc...

Ces matériaux disponibles sous la forme de bandes de 0,5 à 2 mm de largeur et de 10 à 100µm d'épaisseur ou de fils à partir de 10µ de diamètre, conviennent, car ce sont les solutions les moins chères et les plus faciles à mettre en oeuvre.

Le bobinage disposé sur ce circuit magnétique et désigné par la référence générale 21 est un bobinage de N spires jointives, uniformément réparties sur la longueur du circuit magnétique en une ou plusieurs couches.

De façon générale, le nombre de ces spires varie par exemple de 50 à 300.

Le couplage de ce transducteur à la cible peut être réalisé de différentes façons.

En effet, il est possible de prévoir différentes positions relatives de ce transducteur 3 par rapport à cette cible 2 selon l'aimantation de celle-ci.

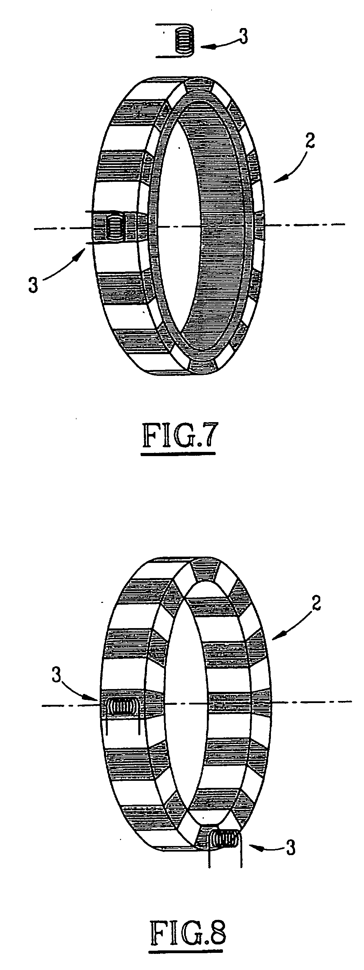

Sur les figures 7 et 8, on a en effet illustré trois positions principales utilisables pour une cible ferrimagnétique.

On a en effet illustré une position transversale dans laquelle le transducteur est dans le même plan que la cible, mais celui-ci est perpendiculaire à un rayon de cette cible.

Il est également possible d'utiliser une position radiale dans laquelle le transducteur est placé dans le même plan que la cible, celui-ci pointant vers le centre de la cible.

C'est alors la composante radiale du champ magnétique rayonné par la cible qui est détectée et cette configuration est particulièrement intéressante pour les cibles présentant une alternance de pôles Nord et Sud très étroite.

Enfin, une position axiale peut également être utilisée, dans laquelle le transducteur est placé dans un axe perpendiculaire au plan de la cible.

Ces différentes positions sont représentées sur la figure 7 pour une cible présentant une aimantation radiale ou tangentielle.

Cependant, une cible à aimantation axiale peut également être utilisée et le transducteur doit alors être placé parallèlement à l'axe de la cible ou sur la tranche de celle-ci comme cela est illustré sur la figure 8.

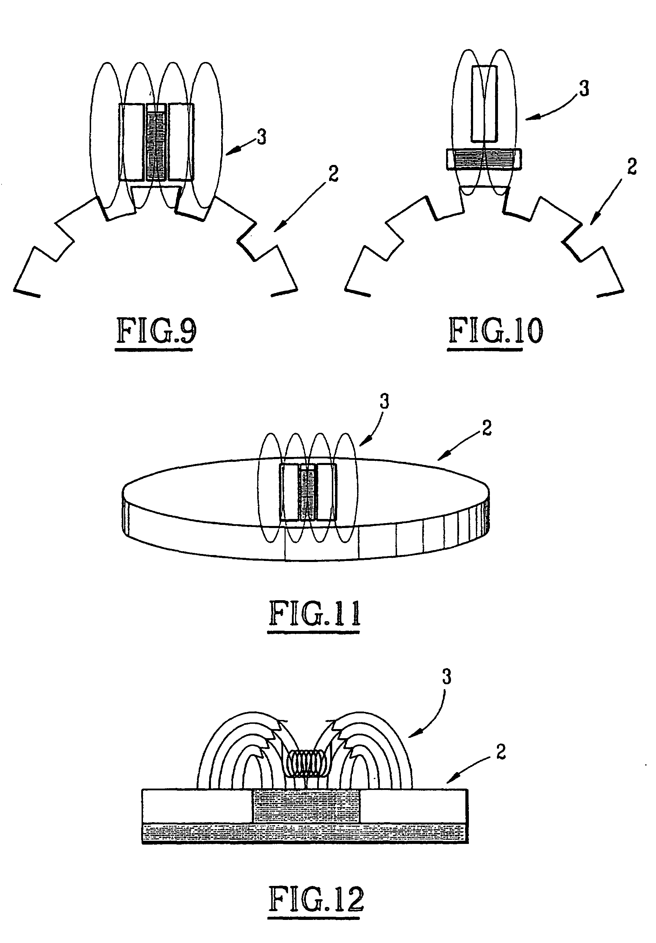

Sur les figures 9,10 et 11, on à illustré l'utilisation d'une cible ferromagnétique.

Lorsque la cible est ferromagnétique, en matériau magnétique doux, il convient alors de rajouter au transducteur, un ou plusieurs aimants, comme cela est illustré.

Ces aimants doivent être disposés de façon à obtenir sans la cible, un flux nul dans le transducteur.

C'est ainsi par exemple que deux aimants sont rajoutés sur les côtés du transducteur pour des positions axiale et radiale, illustrées par exemple sur les figures 9 et 11, tandis qu'un seul aimant est rajouté devant ou derrière ce transducteur, pour la position transversale, telle que celle représentée sur la figure 10.

Ces configurations avec aimants peuvent également fonctionner avec une cible ferrimagnétique.

On a représenté sur la figure 12, une structure particulière de capteur fonctionnant en pont magnétique.

L'axe du circuit magnétique du transducteur 3 est placé parallèlement à la cible 2 dans la direction de facile aimantation.

En raison de sa forme très allongée et de l'épaisseur très faible, ce circuit s'aimante uniquement sous l'influence de composantes magnétiques appliquées suivant son axe.

Le champ varie d'un point à l'autre du circuit magnétique et sa valeur en moyenne, sur la longueur du transducteur, est alors positive ou négative suivant la position du transducteur dans la carte de champ.

Cette valeur moyenne sera nulle pour la position de symétrie correspondant à une inversion du signe de ce champ.

Cette solution évite par exemple l'utilisation de deux transducteurs dans le cas de l'utilisation de techniques différentielles par exemple.

Elle autorise également une très grande sensibilité de détection limitée uniquement par les champs magnétiques parasites.

On conçoit alors au vu de ce qui précède, que l'on applique au bobinage du transducteur, un courant radiofréquence I_{rf} d'amplitude suffisante pour créer un champ magnétique permettant la saturation magnétique du matériau à chaque alternance appliquée dans le bobinage.

La tension aux bornes du bobinage du transducteur est symétrique en l'absence de champ magnétique interne dans le matériau magnétique.

La décomposition en série de Fourrier conduit à des harmoniques pairs nuls. Cette même décomposition fait apparaître des harmoniques pairs non-nuls dans le cas de la présence d'un champ magnétique interne.

Un harmonique pair, comme par exemple le second, se traduit à la sortie du module électronique par un signal continu dont l'amplitude et le signe sont l'image du champ magnétique moyen vu par le circuit magnétique.

Le passage par zéro du signal de sortie permet alors de détecter avec une très grande précision, le changement de signe du champ magnétique rayonné par la cible..

La sensibilité n'est alors limitée que par le champ magnétique terrestre ou la présence de champs magnétiques parasites.

La démodulation synchrone élimine totalement la sensibilité aux parasites électromagnétiques et elle permet de disposer les moyens électroniques associés au capteur à distance de celui-ci et de relier ces deux éléments par l'intermédiaire d'une liaison bifilaire par exemple.

On conçoit alors que ce type de capteur exploitant la décomposition harmonique de signaux par démodulation synchrone, est particulièrement adapté à la mesure de vitesse ou de déplacement d'organes mécaniques par exemple dans des véhicules automobiles.

Ce capteur présente en outre l'avantage de pouvoir fonctionner en permanence dans un environnement thermique sévère comme par exemple au-delà de 200°C.

De nombreuses applications de ce capteur dans les véhicules automobiles peuvent être trouvées, telles que par exemple la détection du point mort des cylindres, par la détection de la position du volant moteur, la tachymétrie, c'est-à-dire par exemple la mesure de la vitesse linéaire d'une cible liée à la vitesse des roues, ou en sortie de boîte de vitesses, la mesure de vitesse pour un système d'anti-blocage de roue ou la mesure du déplacement de tout type de pièce en mouvement équipée de repères ferrimagnétiques ou ferromagnétiques.

Il va de soi bien entendu que d'autres modes de réalisation encore de ce capteur peuvent être envisagés par exemple sans compensation.

## Revendications

1. Capteur de déplacement du type comportant une cible magnétique (2) associée à une pièce dont il y a lieu de capter le déplacement et un transducteur (3) magnétique raccordé à des moyens de traitement de signaux de sortie de ce transducteur pour déterminer le déplacement de la cible et donc de la pièce, le transducteur (3) comportant au moins un circuit magnétique (20) sur lequel est disposé au moins un bobinage (21) raccordé à des moyens (6a) d'application à celui-ci d'un courant périodique radio-fréquence (I_{rf}) d'amplitude déterminée pour engendrer dans le circuit magnétique, un champ de saturation du matériau de celui-ci à chaque alternance du courant radio-fréquence, **caractérisé en ce que** les moyens de traitement comprennent des moyens d'analyse (5) d'au moins un harmonique de la tension mesurée aux bornes du bobinage pour asservir l'amplitude de celui-ci à zéro en appliquant un courant de compensation dans le bobinage pour en déterminer le déplacement de la cible et donc de la pièce.

2. Capteur selon la revendication 1, **caractérisé en ce que** la cible (2) est formée par une cible ferrimagnétique.

3. Capteur selon la revendication 1, **caractérisé en ce que** la cible (2) est formée par une cible ferromagnétique.

4. Capteur selon l'une quelconque des revendications précédentes, **caractérisé en ce que** le transducteur (3) est disposé axialement par rapport à la cible (2).

5. Capteur selon l'une quelconque des revendications 1 à 3, **caractérisé en ce que** le transducteur (3) est disposé radialement par rapport à la cible (2).

6. Capteur selon l'une quelconque des revendications 1 à 3, **caractérisé en ce que** le transducteur (3) est disposé transversalement par rapport à la cible (2).

7. Capteur selon l'une quelconque des revendications 1 à 3, **caractérisé en ce que** le transducteur (3) est disposé parallèlement à la cible (2) dans la direction de facile aimantation.

8. Capteur selon l'une quelconque des revendications précédentes, **caractérisé en ce qu'**au moins un aimant est associé au transducteur (3) de façon à avoir un flux nul dans ce transducteur hors présence de la cible (2).

9. Capteur selon l'une quelconque des revendications précédentes, **caractérisé en ce que** ledit harmonique est un harmonique impair.

10. Capteur selon la revendication 9, **caractérisé en ce que** ledit harmonique est le premier harmonique.

11. Capteur selon l'une quelconque des revendications 1 à 8, **caractérisé en ce que** ledit harmonique est un harmonique pair.

12. Capteur selon la revendication 11, **caractérisé en ce que** ledit harmonique est le second harmonique.

13. Capteur selon l'une quelconque des revendications précédentes, **caractérisé en ce que** les moyens d'application du courant périodique radio-fréquence comprennent un oscillateur (7) délivrant un signal à une fréquence multiple de celle du courant périodique à l'entrée d'un diviseur de fréquence (8), dont la sortie est reliée à l'entrée d'un module de mise en forme de signaux (9), dont la sortie est raccordée au bobinage et **en ce que** les moyens d'analyse comprennent un amplificateur passe-bande (10) dont l'entrée est raccordée au bobinage pour amplifier et sélectionner l'harmonique correspondant et dont la sortie est reliée à l'entrée d'un multiplicateur (11 ) recevant également en entrée le signal de sortie de l'oscillateur (7) et dont la sortie est reliée à l'entrée d'un filtre passe-bas (12) pour une analyse synchrone de signal et délivrer un signal de tension (V₂ₕ) Proportionnel à l'amplitude et à la phase de l'harmonique et donc au déplacement de la cible et de la pièce.

14. Capteur selon les revendications 11 ou 12 et 13, **caractérisé en ce que** le filtre passe-bas (12) est raccordé à des moyens d'alimentation du bobinage en courant de compensation (I_{c}) pour engendrer dans le circuit magnétique du transducteur, un champ magnétique de compensation afin d'obtenir un champ nul dans le transducteur.

15. Capteur selon la revendication 14, **caractérisé en ce que** les moyens d'alimentation comprennent un correcteur de type PID (13) dont la sortie est reliée à un convertisseur tension-courant (14) dont la sortie est raccordée au bobinage pour délivrer à celui-ci, le courant de compensation (I_{c}).

16. Capteur selon la revendication 15, **caractérisé en ce que** les moyens d'analyse comprennent une résistance (15) en série avec le bobinage, un amplificateur (16) raccordé aux bornes de cette résistance et un filtre passe-bas (17) raccordé à la sortie de l'amplificateur pour délivrer en sortie un signal de tension (Vₛ) proportionnel au courant de compensation et donc au déplacement de la cible et de la pièce.

17. Capteur selon l'une quelconque des revendications précédentes, **caractérisé en ce que** le circuit magnétique et le bobinage d'une part, et les différents moyens du capteur raccordés à ceux-ci d'autre part, sont disposés à distance les uns des autres et sont raccordés par des lignes de transmission de signaux.

## Claims

1. Movement sensor of the type comprising a magnetic target (2) which is associated with a part, whose movement is to be sensed, and a magnetic transducer (3) which is connected to means for processing output signals from this transducer in order to determine the movement of the target and therefore of the part, the transducer (3) comprising at least one magnetic circuit (20), in which at least one winding (21) is arranged which is connected to means (6a) for applying to the winding (21) a periodic radio-frequency current (I_{rf}) having a specific amplitude in order to induce, in the magnetic circuit, a saturation field of the material thereof at each alternation of the radio-frequency current, **characterised in that** the processing means comprise analysis means (5) for at least one harmonic of the voltage measured at the winding terminals in order to reduce the amplitude thereof to zero by applying a compensation current in the winding in order to determine therefrom the movement of the target and therefore of the part.

2. Sensor according to claim 1, **characterised in that** the target (2) is formed by a ferrimagnetic target.

3. Sensor according to claim 1, **characterised in that** the target (2) is formed by a ferromagnetic target.

4. Sensor according to any one of the preceding claims, **characterised in that** the transducer (3) is arranged axially relative to the target (2).

5. Sensor according to any one of claims 1 to 3, **characterised in that** the transducer (3) is arranged radially relative to the target (2).

6. Sensor according to any one of claims 1 to 3, **characterised in that** the transducer (3) is arranged transversely relative to the target (2).

7. Sensor according to any one of claims 1 to 3, **characterised in that** the transducer (3) is arranged parallel with the target (2) in the direction of basic magnetisation.

8. Sensor according to any one of the preceding claims, **characterised in that** at least one magnet is associated with the transducer (3) so as to have a zero flux in the transducer when not in the presence of the target (2).

9. Sensor according to any one of the preceding claims, **characterised in that** the harmonic is an odd harmonic.

10. Sensor according to claim 9, **characterised in that** the harmonic is the first harmonic.

11. Sensor according to any one of claims 1 to 8, **characterised in that** the harmonic is an even harmonic.

12. Sensor according to claim 11, **characterised in that** the harmonic is the second harmonic.

13. Sensor according to any one of the preceding claims, **characterised in that** the means for applying the periodic radio-frequency current comprise an oscillator (7) which supplies a signal having a frequency which is a multiple of that of the periodic current at the input of a frequency divider (8), whose output is connected to the input of a module for shaping signals (9), whose output is connected to the winding, and **in that** the analysis means comprise a band-pass filter amplifier (10) whose input is connected to the winding in order to amplify and select the corresponding harmonic and whose output is connected to the input of a multiplier (11) which also receives at the input the output signal from the oscillator (7) and whose output is connected to the input of a low-pass filter (12) for synchronous signal analysis and in order to supply a voltage signal (V₂ₕ) which is proportional to the amplitude and the phase of the harmonic and therefore to the movement of the target and the part.

14. Sensor according to claim 11 or claim 12 and claim 13, **characterised in that** the low-pass filter (12) is connected to means for supplying the winding with compensation current (I_{c}) in order to induce in the magnetic circuit of the transducer a magnetic compensation field in order to obtain a zero field in the transducer.

15. Sensor according to claim 14, **characterised in that** the supply means comprise a PID controller (13) whose output is connected to a voltage/current converter (14) whose output is connected to the winding in order to supply the compensation current (I_{c}) thereto.

16. Sensor according to claim 15, **characterised in that** the analysis means comprise a resistance (15) which is in series with the winding, an amplifier (16) which is connected to the terminals of this resistance and a low-pass filter (17) which is connected to the output of the amplifier in order to supply at the output a voltage signal (Vₛ) which is proportional to the compensation current and therefore to the movement of the target and the part.

17. Sensor according to any one of the preceding claims, **characterised in that** the magnetic circuit and the winding, on the one hand, and the various means of the sensor which are connected thereto, on the other hand, are arranged with spacing from each other and are connected by signal transmission lines.

## Patentansprüche

1. Verschiebungssensor des Typs, der ein magnetisches Zielobjekt (2), dem ein Teil zugeordnet ist, dessen Verschiebung erfasst werden soll, und einen magnetischen Wandler (3), der mit Mitteln zur Verarbeitung von Ausgangssignalen dieses Wandlers verbunden ist, um die Verschiebung des Zielobjekts und daher des Teils zu bestimmen, umfasst, wobei der Wandler (3) wenigstens einen Magnetkreis (20) umfasst, an dem wenigstens eine Wicklung (21) angeordnet ist, die mit Mitteln (6a) verbunden ist, die an sie einen periodischen Hochfrequenzstrom (I_{rf}) mit bestimmter Amplitude anlegen, um in dem Magnetkreis in jeder Halbperiode des Hochfrequenzstroms ein Sättigungsfeld für das Material der Wicklung zu erzeugen, **dadurch gekennzeichnet, dass** die Verarbeitungsmittel Mittel (5) zum Analysieren wenigstens einer Harmonischen der an den Anschlüssen der Wicklung gemessenen Spannung umfassen, um deren Amplitude auf null zu regeln, indem in die Wicklung ein Kompensationsstrom geschickt wird, um dadurch die Verschiebung des Zielobjekts und daher des Teils zu bestimmen.

2. Sensor nach Anspruch 1, **dadurch gekennzeichnet, dass** das Zielobjekt (2) aus einem ferrimagnetischen Zielobjekt gebildet ist.

3. Sensor nach Anspruch 1, **dadurch gekennzeichnet, dass** das Zielobjekt (2) aus einem ferromagnetischen Zielobjekt gebildet ist.

4. Sensor nach einem der vorhergehenden Ansprüche, **dadurch gekennzeichnet, dass** der Wandler (3) in Bezug auf das Zielobjekt (2) axial angeordnet ist.

5. Sensor nach einem der Ansprüche 1 bis 3, **dadurch gekennzeichnet, dass** der Wandler (3) in Bezug auf das Zielobjekt (2) radial angeordnet ist.

6. Sensor nach einem der Ansprüche 1 bis 3, **dadurch gekennzeichnet, dass** der Wandler (3) in Bezug auf das Zielobjekt (2) transversal angeordnet ist.

7. Sensor nach einem der Ansprüche 1 bis 3, **dadurch gekennzeichnet, dass** der Wandler (3) in Richtung der geringen Magnetisierung parallel zum Zielobjekt (2) angeordnet ist.

8. Sensor nach einem der vorhergehenden Ansprüche, **dadurch gekennzeichnet, dass** dem Wandler (3) wenigstens ein Magnet zugeordnet ist, derart, dass in diesem Wandler in Gegenwart des Zielobjekts (2) ein Fluss null erhalten wird.

9. Sensor nach einem der vorhergehenden Ansprüche, **dadurch gekennzeichnet, dass** die Harmonische eine ungeradzahlige Harmonische ist.

10. Sensor nach Anspruch 9, **dadurch gekennzeichnet, dass** die Harmonische die erste Harmonische ist.

11. Sensor nach einem der Ansprüche 1 bis 8, **dadurch gekennzeichnet, dass** die Harmonische eine geradzahlige Harmonische ist.

12. Sensor nach Anspruch 11, **dadurch gekennzeichnet, dass** die Harmonische die zweite Harmonische ist.

13. Sensor nach einem der vorhergehenden Ansprüche, **dadurch gekennzeichnet, dass** die Mittel zum Anlegen des periodischen hochfrequenten Stroms einen Oszillator (7) umfassen, der an den Eingang eines Frequenzteilers (8), dessen Ausgang mit dem Eingang eines Signalformungsmoduls (9) verbunden ist, dessen Ausgang mit der Wicklung verbunden ist, ein Signal mit einer Frequenz liefert, die ein Vielfaches der Frequenz des periodischen Stroms ist, und dass die Analysemittel einen Bandverstärker (10) umfassen, dessen Eingang mit der Wicklung verbunden ist, um die entsprechende Harmonische zu verstärken und auszuwählen, und dessen Ausgang mit dem Eingang eines Multiplizierers (11) verbunden ist, der außerdem als Eingang das Ausgangssignal des Oszillators (7) empfängt, und dessen Ausgang mit dem Eingang eines Tiefpassfilters (12) verbunden ist, um das Signal synchron zu analysieren und um ein Spannungssignal (V₂ₕ) auszugeben, das zu der Amplitude und zu der Phase der Harmonischen und daher zur Verschiebung des Zielobjekts und des Teils proportional ist.

14. Sensor nach den Ansprüchen 11 oder 12 und 13, **dadurch gekennzeichnet, dass** das Tiefpassfilter (12) mit Mitteln zum Speisen der Wicklung mit einem Kompensationsstrom (I_{c}) verbunden ist, um in dem Magnetkreis des Wandlers ein Kompensationsmagnetfeld zu erzeugen, um in dem Wandler ein Feld null zu erhalten.

15. Sensor nach Anspruch 14, **dadurch gekennzeichnet, dass** die Speisemittel einen Korrektor des PID-Typs (13) umfassen, dessen Ausgang mit einem Spannungs/Strom-Umsetzer (14) verbunden ist, dessen Ausgang mit der Wicklung verbunden ist, um an diese den Kompensationstrom (I_{c}) zu liefern.

16. Sensor nach Anspruch 15, **dadurch gekennzeichnet, dass** die Analysemittel einen mit der Wicklung in Reihe geschalteten ohmschen Widerstand (15), einen mit den Anschlüssen dieses ohmschen Widerstandes verbundenen Verstärker (16) und ein mit dem Ausgang des Verstärkers verbundenes Tiefpassfilter (17) umfassen, um am Ausgang ein Spannungssignal (Vₛ) auszugeben, das zu dem Kompensationsstrom und daher zu der Verlagerung des Zielobjekts und des Teils proportional ist.

17. Sensor nach einem der vorhergehenden Ansprüche, **dadurch gekennzeichnet, dass** der Magnetkreis und die Wicklung einerseits und die verschiedenen Mittel des Sensors, die mit ihm verbunden sind, andererseits in gegenseitigem Abstand angeordnet und über Signalübertragungsleitungen verbunden sind.
